**Europäisches Patentamt**

**European Patent Office**

**Office européen des brevets**

(11) Veröffentlichungsnummer: **0 138 071**
**B1**

(12) **EUROPÄISCHE PATENTSCHRIFT**

(45) Veröffentlichungstag der Patentschrift:
**13.01.88**

(21) Anmeldenummer: **84110962.2**

(22) Anmeldetag: **13.09.84**

(51) Int. Cl.⁴: **G 10 L 5/06**

(54) **Verfaren zur Anregungsanalyse für die automatische Spracherkennung.**

(30) Priorität: **29.09.83 DE 3335343**

(43) Veröffentlichungstag der Anmeldung:
**24.04.85 Patentblatt 85/17**

(45) Bekanntmachung des Hinweises auf die Patenterteilung:
**13.01.88 Patentblatt 88/2**

(84) Benannte Vertragsstaaten:
**AT DE FR GB IT**

(73) Patentinhaber: **Siemens Aktiengesellschaft Berlin und München, Wittelsbacherplatz 2, D-8000 München 2 (DE)**

(72) Erfinder: **Höge, Harald, Dr., Hauptstrasse 19, D-8035 Unterbrunn (DE)**

(56) Entgegenhaltungen:
IEEE TRANSACTIONS ON ACOUSTICS SPEECH AND SIGNAL PROCESSING, Band ASSP-28, Nr. 5, Oktober 1980, Seiten 550-561, IEEE, New York, USA; B.V. COX et al.: "Nonparametric rank-order statistics applied to robust voiced-unvoiced-silence classification"
IEEE TRANSACTIONS ON ACOUSTICS, SPEECH AND SIGNAL PROCESSING, Band ASSP-24, Nr. 3, Juni 1976, Seiten 201-212, IEEE, New York, USA; B.S. ATAL et al.: "A pattern recognition approach to voiced-unvoiced-silence classification with applications to speech recognition"
IEEE TRANSACTIONS ON ACOUSTICS, SPEECH AND SIGNAL PROCESSING, Band ASSP-25, Nr. 4, August 1977, Seiten 338-343, IEEE, New York, USA; L.R. RABINER et al.: "Application of an LPC distance measure to the voiced-unvoiced-silence detection problem"

(56) Entgegenhaltungen: (Fortsetzung)
IEEE TRANSACTIONS ON ACOUSTICS, SPEECH AND SIGNAL PROCESSING, Band ASSP-27, Nr. 1, Februar 1979, Seiten 83-89, IEEE, New York, US; L.J. SIEGEL: "A procedure for using pattern classification techniques to obtain a voiced/unvoiced classifier"

**Beschreibung**

Die vorliegende Erfindung betrifft ein Verfahren zur Anregungsanalyse für die automatische Spracherkennung, bei dem in einer ersten Extraktionsstufe eines Erkennungssystems eine Merkmalsextraktion aus dem zu erkennenden Sprachsignalabschnitt vorgenommen wird und bei dem in einer zweiten Extraktionsstufe des Erkennungssystems eine Klassifizierung der gewonnenen Merkmale durch Vergleich mit den vorgegebenen Merkmalen des Wortschatzes des Erkennungssystems durchgeführt wird.

Zur Erkennung von Sprache, die in akustischer Form vorliegt, müssen geeignete Merkmale aus den Sprachsignal extrahiert werden. Diese Merkmalsextraktion bildet die erste Stufe eines jeden Erkennungssystems. In einer zweiten Stufe, der Klassifikationsstufe, erfolgt dann der Vergleich der Merkmale des zu erkennenden Wortes mit den Merkmalen des Wortschatzes des Erkennungssystems. Wichtige Merkmale bilden den anregungszustand, welcher vorliegt, wobei erkannt werden muß, ob ein Sprachsignalabschnitt als stimmhaft, stimmlos oder als Pause charakterisiert wird.

Es sind mehrere Verfahren zur Extraktion des Anregungszustandes bekannt. Diese bekannten Verfahren sind entweder sehr aufwendig und eignen sich deshalb nicht für eine Echtzeitverarbeitung, oder sie sind wenig aufwendig, jedoch ist eine korrekte Einteilung des Sprachsignals in die zugehörigen Anregungsbereiche "Stimmhaft", "Stimmlos" oder "Pause" nicht gewährleistet.

Der vorliegenden Erfindung liegt die Aufgabe zugrunde, ein Verfahren zur Anregungsanalyse für die automatische Spracherkennung zu schaffen, das den Anregungszustand sicher und in Echtzeit aus dem Sprachsignal bestimmt.

Die der vorliegenden Erfindung zugrundeliegende Aufgabe wird durch eim Verfahren nach dem Oberbegriff des Patentanspruchs 1 gelöst, das durch die in dem kennzeichnenden Teil des Patentanspruchs 1 angegebenen Merkmale charakterisiert ist.

Vorteilhafte Weiterbildungen der Erfindung sind durch die in den Unteransprüchen angegebenen Merkmale gekennzeichnet.

Im folgenden wird die Erfindung durch mehrere Figuren im einzelnen beschrieben.

Fig. 1 zeigt eine schematiache Darstellung eines Zweistufenprinzips für eine Anregungsparameterextraktion.

Fig. 2 zeigt ein Flußdiagramm zur Bestimmung einer Relativenergie.

Fig. 3 zeigt schematisch in Diagrammform bzw. symbolisch die verschiedenen Funktionselemente zur Durchführung des erfindungsgemäßen Verfahrens.

Fig. 4 zeigt schematisch den Aufbau bzw. die Struktur einer Funktionseinheit zur Bestimmung des Anregungszustandes gemäß der vorliegenden Erfindung.

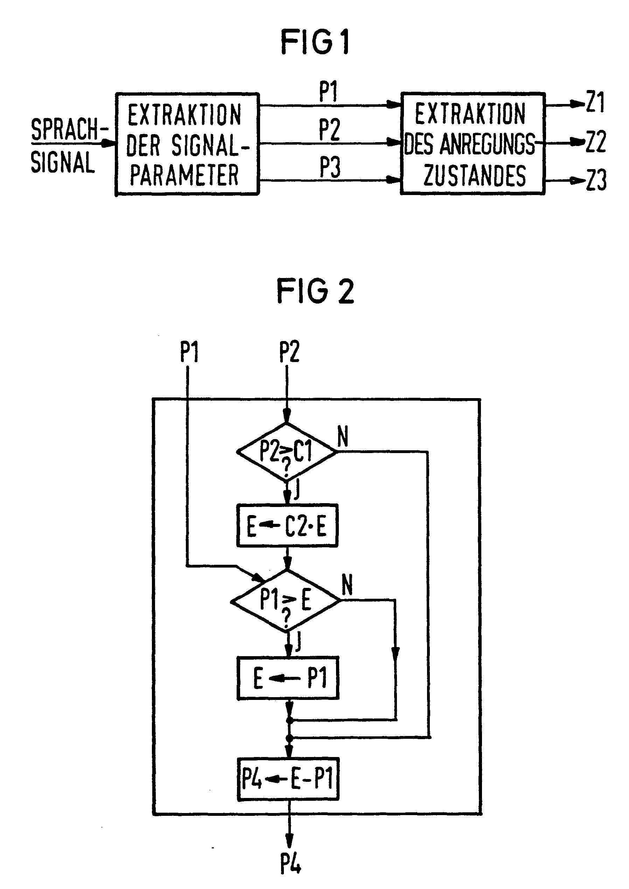

Wie bereits erläutert, erfolgt die Extraktion der Anregungsparameter zweistufig, vgl. Fig. 1. In einer ersten Stufe werden aus dem Sprachsignal Signalparameter, aus denen in einer zweiten Stufe der Anregungszustand bestimmt wird, extrahiert. Bei den Signalparametern $P_1...P_3$ handelt es sich um in der Literatur bekannte Parameter, welche in Echtzeit beispielsweise mit einem Signalprozessor oder einer geeigneten Hardware-Schaltungsanordnung aus den Zeitabschnitten (z. B. 10 ms) des Sprachsignals ermittelt werden können. Der Signalparameter "Energie" ($P_1$) bildet die in einem logarithmischen Maßstab (z. B. in dB) gemessene Energie für einen Zeitabschnitt. Der sog. Voicing-Parameter $P_2$ berechnet sich aus der normierten Autokorrelationsfunktion des Sprachsignals oder bei Verwendung der Methode der "LPC" aus dem invers "LPC-gefilterten" Sprachsignal. Das Energieverhältnis $P_3$ wird als das Verhältnis der Energie des Sprachsignals in einem unteren Frequenzband (z. B. 0-2000 Hz) zu der Gesamtenergie des Sprachsignalbandes (z. B. 0-4000 Hz) definiert.

Gemäß der vorliegenden Erfindung wird zur Lösung der zuvor genannten Aufgabe eine Bestimmung des Anregungszustandes $Z_1$ bis $Z_3$ aus den Parametern $P_1$ bis $P_3$ vorgenommen.

Zunächst wird dazu nach dem Flußdiagramm gemäß Fig. 2 aus den Parametern $P_1$ und $P_2$ eine Relativenergie $P_4$ ermittelt. Hierbei bilden die Größen $C_1$, $C_2$ geeignete festzulegende Konstanten. Die Zwischengröße E stellt ein Maß für die Energie des Sprachsignals in stimmhaften Bereichen des Sprachsignals dar. Die Stimmhaftigkeit wird anhand des Voicing-Parameters $P_2$ getestet. Die Ausgangsgröße $P_4$ bildet das Verhältnis der Energie $P_1$ des aktuellen Sprachsignalabschnittes zu der Energie E.

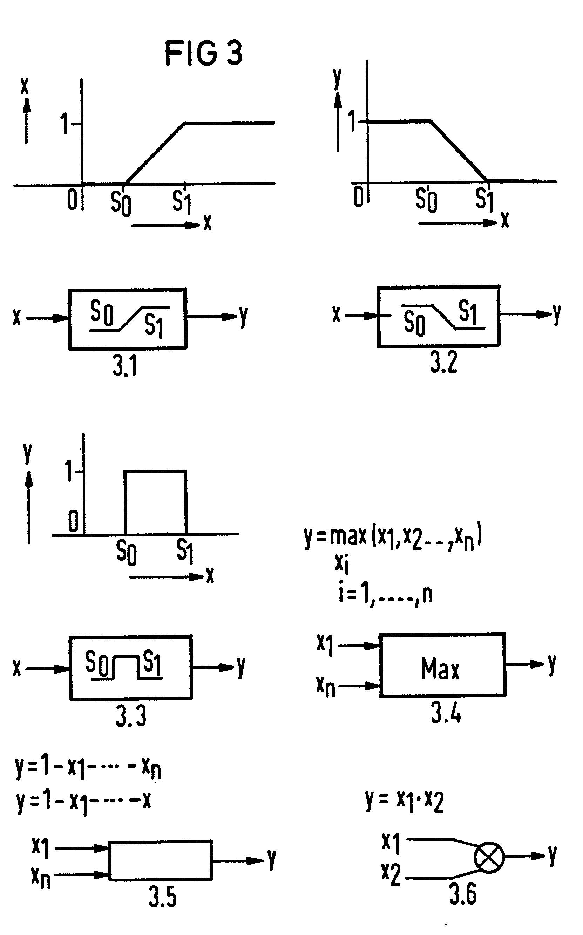

Grundlage für die folgenden Verfahrensabschnitte bilden die in Fig. 3 dargestellten Funktionselemente, welche eine Transformation von Eingangssignalen $x_1$ in ein Ausgangssignal $y_i$ vornehmen. Die Funktionselemente können entweder durch einen Mikroprozessor software-mäßig oder durch eine geeignete Hardware-Schaltungsanordnung realisiert werden. Bei den Schwellenelementen und Bereichselementen sind die Schwellenwerte $S_0$, $S_1$ entsprechend der gewünschten Funktion einzustellen.

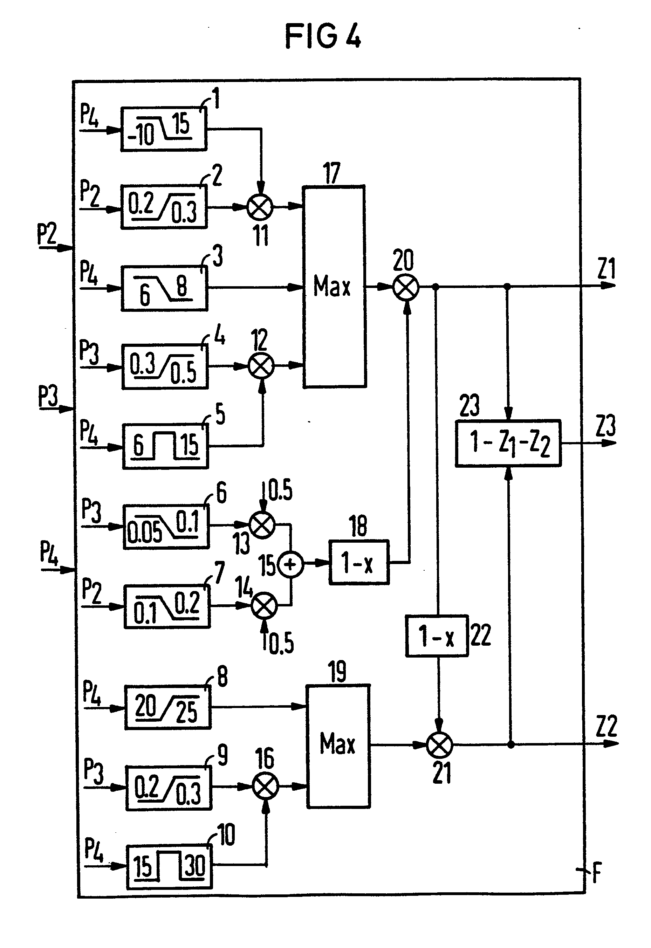

In Fig. 4 ist zur Bestimmung des Anregungszustandes eine spezielle Verknüpfung der Funktionselemente gezeigt. Die eingetragenen Schwellenwerte sind nur zur Konkretisierung der angegebenen Schaltung zu verstehen. Der optimale Wert der Schwellenwerte hängt u.a. von der Bandbreite des Sprachsignals und der gewählten Skalierung der Signalparameter ab.

Die Anregungszustände $Z_1$ "Stimmhaftes", $Z_2$ "Stimmlos", $Z_3$ "Pause" nehmen Werte von 0 bis 1 an, und zwar derart, daß $1 = Z_1 + Z_2 + Z_3$ gilt. Je größer der Wert eines Zustandes ist, um so sicherer kann einem Sprachsignalabschnitt der Zustand "Stimmhaft", "Stimmlos" oder "Pause" zugeordnet werden. Wird für die Sprachanalyse eine eindeutige Zuordnung eines Sprachsignals zu seinem betreffenden Zustand gefordert, so kann als Zustand derjenige gewählt werden, der den jeweils größten Wert aufweist.

Fig. 3 zeigt, wie bereits erläutert, schematisch in Diagrammform bzw. symbolisch die verschiedenen Funktionselemente zur Durchführung des erfindungsgemäßen Verfahrens. In Fig. 3 sind mehrere unterschiedliche Funktionselemente, nämlich ein Schwellenelement mit einer Ausgangskennlinie mit einer positiven Steigung (vgl. Fig. 3, 1), ein zweites Schwellenelement mit einer Ausgangskennlinie mit negativer Steigung (vgl. Fig. 3.2), ein Bereichselement mit einer Ausgangskennlinie, die angibt, in welchem Wertebereich (beispielsweise Spannungsbereich) sich der Ausgangssignalpegel von dem unterscheidet, der sich einstellt, wenn das Eingangssignal außerhalb des bestimmten Wertebereiches liegt (vgl. Fig. 3.3), ein Maximumelement mit n Signaleingängen und einem Signalausgang, das aus den n Eingangssignalen dasjenige mit den maximalen Wert (beispielsweise Spannungswert) als das das Ausgangssignal bestimmende Eingangssignal identifiziert (vgl. Fig. 3.4), ein Differenzelement mit mehreren Signaleingängen $x_1$... $x_n$ und einem Signalausgang y, das die Funktion "$y = 1 - x_1 - ... x_n$ erfüllt (vgl. Fig. 3.5), und ein Multiplikationselement mit zwei Signaleingängen $x_1$ und $x_2$ und einem Signalausgang y, das die Funktion "$y = x_1 \cdot x_2$" erfüllt (vgl. Fig. 3.6), gezeigt.

Das Funktionselement gemäß Fig. 3.1 kann beispielsweise mittels einer Schmitt-Trigger-Schaltungsanordnung bzw. einer vergleichbaren Schaltungsanordnung oder vorzugweise software-mäßig realisiert sein. Das Funktionselement gemäß Fig. 3.2 kann auf ähnliche Weise wie dasjenige gemäß Fig. 3.1 realisiert sein. Das Funktionselement gemäß Fig. 3.3 kann ebenfalls beispielsweise mittels einer Schmitt-Trigger-Schaltungsanordnung oder einer Z-Dioden-Schaltungsanordnung oder dgl. in an sich bekannter Weise oder vorzugsweise software-mäßig realisiert sein. Das Funktionselement gemäß Fig. 3.4 kann beispielsweise in Form einer an sich bekannten Klemmschaltung oder vorzugsweise software-mäßig realisiert sein. Das Funktionselement gemäß Fig. 3.5 kann beispielsweise mittels logischer Schaltkreiselemente oder vorzugsweise software-mäßig realisiert sein. Schließlich kann das Funktionselement gemäß Fig. 3.6 ebenfalls mittels einer logischen Schaltkreistechnik oder vorzugsweise software-mäßig realisiert sein. Hardware-mäßige Realisierungen sind beispielsweise in der Dissertation von Martin, Thomas "Acoustic Recognition of a Limited Vocabulary in Continuous Speech", University of Pennsylvania, USA, beschrieben.

Wie bereits erläutert, zeigt Fig. 4 schematisch den Aufbau bzw. die Struktur einer Funktionseinheit zur Bestimmung des Anregungszustandes gemäß der vorliegenden Erfindung. Die in Fig. 4 gezeigte Funktionseinheit F stellt jedoch nur ein bevorzugtes Ausführungsbeispiel für die Realisierung einer derartigen Funktionseinheit dar. Selbstverständlich können gemäß der Aufgabenstellung andere Verknüpfungsstrukturen verwendet werden.

Die Funktionseinheit F weist gemäß dem gezeigten Ausführungsbeispiel eine Vielzahl von verschiedenen Funktionselementen, wie sie in Fig. 3 gezeigt sind, an ihrer Eingangsseite auf. Einem ersten Funktionselement 1, das ein Schwellenelement mit negativer Steigung ist, wird der Hilfsparameter $P_4$ zugeführt. Einem zweiten Funktionselement 2, das ein Schwellenelement mit positiver Steigung ist, wird der Voicing-Parameter $P_2$ zugeführt. Einem dritten Funktionselement 3, das ein Schwellenelement mit negativer Steigung ist, wird der Hilfsparameter $P_4$ zugeführt. Einem vierten Funktionselement 4, das ein Schwellenelement mit positiver Steigung ist, wird der Parameter $P_3$ für das spektrale Energieverhältnis zugeführt. Einem fünften Funktionselement 5, das ein Bereichselement ist, wird der Hilfsparameter $P_4$ zugeführt. Einem sechsten Funktionselement 6, das ein Schwellenelement mit negativer Steigung ist, wird der Parameter $P_3$ für das spektrale Energieverhältnis zugeführt. Einem siebten Funktionselement 7, das ein Schwellenelement mit negativer Steigung ist, wird der Voicing-Parameter $P_2$ zugeführt. Einem achten Funktionselement 8, das ein Schwellenelement mit positiver Steigung ist, wird der Hilfsparameter $P_4$ zugeführt. Einem neunten Funktionselement 9, das ebenfalls ein Schwellenelement mit positiver Steigung ist, wird der Parameter $P_3$ für das spektrale Energieverhältnis zugeführt. Schließlich wird einem zehnten Funktionselement 10, das ein Bereichselement ist, der Hilfsparameter $P_4$ zugeführt.

Die Ausgangssignale der auf der Eingangsseite der Funktionseinheit F angeordneten Funktionselemente 1....10 werden, wie im folgenden beschrieben, miteinander verknüpft.

Die Ausgangssignale des ersten Funktionselements 1 und des zweiten Funktionselementes 2 werden mittels eines Multiplikationselements 11 verknüpft bzw. multipliziert. Die Ausgangssignale des vierten bzw. fünften Funktionselementes 4 bzw. 5 werden ebenfalls mittels eines Multiplikationselements 12 miteinander verknüpft bzw. multipliziert. Das Ausgangssignal des sechsten Funktionselements 6 wird mittels eines weiteren Multiplikationselements 13 mit einem Faktor 0.5 multipliziert. Das Ausgangssignal des siebten Funktionselements 7 wird mittels eines weiteren Multiplikationselements 14 ebenfalls mit einem Faktor 0.5 multipliziert. Schließlich werden die Ausgangssignale des neunten Funktionselements 9 und des zehnten Funktionselements 10 mittels eines weiteren Multiplikationselements 16 miteinander verknüpft bzw. multipliziert.

Das Ausgangssignal des Multiplikationselements 11, das Ausgangssignal des Funktionselements 3 und das Ausgangssignal des Multiplikationselements 12 werden jeweils an getrennte Signaleingänge eines Maximumelements 17 geführt. Das Ausgangssignal des Multiplikationselements 13 und das Ausgangssignal des Multiplikationselements 14 werden mittels eines Addierers 15 addiert, und das Ausgangssignal dieses Addierers 15 dient als Eingangssignal für ein Differenzelement $(1-x)$ 18. Das Ausgangssignal des achten Funktionselements 8 und das Ausgangssignal des Multiplikationselements 16 werden jeweils auf getrennte Signaleingänge eines weiteren Maximumelements 19 geführt. Das Ausgangssignal des ersten Maximumelements 17 und das Ausgangssignal des Differenzelements 18 werden mittels eines weiteren Multiplikationselements 20 miteinander verknüpft bzw. multipliziert. Das Ausgangssignal des Multiplikationselements 20 wird einem ersten Signalausgang $Z_1$ der Funktionseinheit F, der ein Ausgangssignal für das Kriterium "Stimmhaft" abgibt, zugeführt. Außerdem wird das Ausgangssignal des Multiplikationselements 20 einem Signaleingang eines weiteren Differenzelements $(1-x)$ 22 sowie dem Signaleingang eines anderen Differenzelements $(1-Z_1-Z_2)$ 23 zugeführt. Das Ausgangssignal des zweiten Maximumelements 19 wird mittels eines weiteren Multiplikationselements 21 mit dem Ausgangssignal des Differenzelements $(1-x)$ 22 verknüpft bzw. multipliziert.

Das Ausgangssignal dieses Multiplikationselements wird zum einen einem zweiten Signalausgang der Funktionseinheit E, nämlich einem Signalausgang $Z_2$ für ein Signal, das dem Kriterium "Stimmlos" entspricht, sowie zum anderen einem zweiten Signaleingang des Differenzsignals $(1-Z_1-Z_2)$ des Differenzelements 23 zugeführt. Das Ausgangssignal dieses zuletzt genannten Differenzelements 23 wird schließlich einem dritten Signalausgang der Funktionseinheit F, nämlich einem Signalausgang $Z_3$ zugeführt, der ein Ausgangssignal für das Kriterium "Pause" abgibt.

## Patentansprüche

1. Verfahren zur Anregungsanalyse für die automatische Spracherkennung, bei dem in einer ersten Extraktionsstufe eines Erkennungssystems eine Signalparameterextraktion aus dem zu erkennenden Sprachsignal vorgenommen wird und in einer zweiten Extraktionsstufe des Erkennungssystems eine Merkmalsbestimmung und eine Klassifizierung mit den gewonnenen Merkmalen durch Vergleich mit den vorgegebenen Merkmalen des Wortschatzes des Erkennungssystems durchgeführt wird und bei dem zur Bestimmung des Anregungszustandes, nämlich entweder "Stimmhaft" $(Z_1)$, "Stimmlos" $(Z_2)$ oder "Pause" $(Z_3)$ in der zweiten Extraktionsstufe des Erkennungssystems in der ersten Extraktionsstufe Parameter, nämlich der Parameter für die Energie des Sprachbandes $(P_1)$, der Voicing-Parameter $(P_2)$ und der Parameter für das spektrale Energieverhältnis $(P_3)$, gewonnen werden, dadurch gekennzeichnet, daß zunächst aus dem Parameter für die Energie des Sprachbandes $(P_1)$ und dem Voicing-Parameter $(P_2)$ ein Hilfsparameter $(P_4)$ für eine Relativenergie bestimmt wird, wobei der Hilfsparameter $(P_4)$ das Verhältnis der Energie $(P_1)$ des aktuellen Sprachsignals zu einer Zwischengröße der Energie E, die ihrerseits ein Maß für die Energie des Sprachsignals in stimmhaften Bereichen darstellt, bildet, daß anschließend die Parameter $(P_1, P_2, P_3, P_4)$ in einer Verknüpfungsfunktionseinheit nach einem vorbestimmten Verknüpfungsschema derart verknüpft werden, daß einer der drei Anregungszustände durch den betreffenden Anregungszustands-Parameter $(Z_1, Z_2$ oder $Z_3)$ gekennzeichnet wird, wozu vor der Verknüpfung mit Hilfe festgelegter Funktionselemente eine Transformation von Eingangssignalen $(x_i)$ in Ausgangssignale $(y_i)$ dieser Funktionselemente durchgeführt wird, wobei als Eingangssignale die Parameter $(P_1, P_2, P_3, P_4)$ fungieren und wobei die Ausgangssignale die zu verknüpfenden Signale sind, daß zur Erzeugung des Hilfsparameters $(P_4)$ zunächst der Voicing-Parameter $(P_2)$ mit einer empirisch ermittelten Konstanten $(C_1)$ verglichen wird, daß für den Fall, daß der Voicing-Parameter $(P_2)$ größer als die Konstante $(C_1)$ ist, eine Multiplikation der Zwischengröße der Energie $(E)$ mit einer ebenfalls empirisch ermittelten weiteren Konstanten $(C_2)$ zur Gewinnung einer neuen Zwischengröße $(E)$ durchgeführt wird, daß der Parameter für die Energie $(P_1)$ mit der neuen Zwischengröße $(E)$ verglichen wird, daß für den Fall, daß der Parameter für die Energie $(P_1)$ größer als die neue Zwischengröße $(E)$ ist, die Zwischengröße $(E)$ den Wert des Parameters für die Energie $(P_1)$ annimmt, daß für den Fall, daß der Parameter für die Energie $(P_1)$ nicht größer als die neue Zwischengröße $(E)$ ist, die neue Zwischengröße $(E)$ für die Energie erhalten bleibt, daß für den Fall, daß der Voicing-Parameter $(P_2)$ nicht größer als die Konstante $(C_1)$ ist, die ursprüngliche Zwischengröße $(E)$ für die Energie unverändert bleibt und daß der Wert für den Hilfsparameter $(P_4)$ als die Differenz zwischen der geltenden Zwischengröße $(E)$ für die Energie und dem Parameter für die Energie $(P_1)$ festgelegt wird.

2. Verfahren nach Anspruch 1, dadurch gekennzeichnet, daß die Funktionselemente durch die Software in einem Prozessor, vorzugsweise einem Mikroprozessor, realisiert sind.

3. Verfahren nach Anspruch 1, dadurch gekennzeichnet, daß Funktionselemente durch eine Hardware-Schaltungsanordnung realisiert sind.

4. Verfahren nach Anspruch 1, dadurch gekennzeichnet, daß zum Zwecke einer eindeutigen Zuordnung eines Sprachsignals zu seinem betreffenden Zustand derjenige Zustand ausgewählt wird, für den der jeweils höchste Signalwert ermittelt worden ist.

## Claims

1. A method of excitation analysis for automatic speech recognition, wherein a signal parameter extraction from the speech signal which is to be recognised is carried out in a first extraction stage of a recognition system, and a feature specification and classification of the obtained features by comparison of predetermined features of the vocabulary of the recognition system are carried out and in a second extraction stage of the recognition sytem, and to specify the excitation state, namely either "voiced" ($Z_1$),"unvoiced" ($Z_2$) or "pause" ($Z_3$) in the second extraction stage of the recognition system, selected parameters are obtained in the first excitation stage, namely the parameter for the nergy of the speech band ($P_1$), the voicing parameter ($P_2$) and the parameter for the spectral energy ratio ($P_3$), characterised in that an auxiliary parameter ($P_4$) for a relative energy is defined firstly from the parameter for the energy of the speech band ($P_1$) and from the voicing parameter ($P_2$), where the auxiliary parameter ($P_4$) forms the ratio of the energy ($P_1$) of the current speech signal to an intermediate value of the energy (E), which itself represents a gauge of the energy of the speech signal in voiced zones, that the parameters ($P_1,P_2,P_3,P_4$) are then logic-linked in a logic-linking function unit in accordance with a predetermined logic-linking plan such that one of the three excitation states is characterised by the respective excitation state parameter ($Z_1$, $Z_2$ or $Z_3$), for which purpose a transformation of input signals ($x_i$) to output signals ($y_i$) of these function elements takes place prior to the logic-linking with the assistance of a specified function element, where the parameters ($P_1,P_2,P_3,P_4$) function as input signals and where the output signals are the signals which are to be logic-linked, that the auxiliary parameter ($P_4$) is generated by firstly comparing the voicing parameter ($P_2$) with an empirically-determined constant ($C_1$), that in the event that the voicing parameter ($P_2$) is greater than the constant ($C_1$) the intermediate value of the energy (E) is multiplied by a likewise empirically-determined further constant ($C_2$) in order to form a new intermediate value (E), that the parameter for the energy ($P_1$) is compared with the new intermediate value (E), that in the event that the parameter for the energy ($P_1$) being greater than the new intermediate value (E) the intermediate value (E) assumes the value of the parameter for the energy ($P_1$), that in the event that the parameter for the energy ($P_1$) is not greater than the new intermediate value (E) the new intermediate value (E) for the energy is retained, that in the event that the voicing parameter ($P_2$) is not greater than the constant ($C_1$) the original intermediate value (E) for the energy remains unchanged, and that the value for the auxiliary parameter ($P_4$) is specified as the difference between the valid intermediate value (E) for the energy and the parameter for the energy ($P_1$).

2. A method as claimed in Claim 1, characterised in that the function elements are formed by software in a processor, preferably a microprocessor.

3. A method as claimed in Claim 1, characterised in that the function elements are formed by a hardware circuit arrangement.

4. A method as claimed in Claim 1, characterised in that in order to clearly assign a speech signal to its respective state, the state for which the respective highest signal value has been determined is selected.

## Revendications

1. Procédé pour l'analyse de l'état d'excitation, en vue de la reconnaissance automatique de la parole, selon lequel une extraction de paramètres de signal du signal vocal à reconnaître est effectuée dans une première étape d'extraction d'un système de reconnaissance et une détermination de traits distinctifs, de même qu'une classification, est effectuée avec les traits obtenus dans une seconde étape d'extraction du système de reconnaissance, par comparaison avec les traits préfixés du vocabulaire du système de reconnaissance, et selon lequel, pour la détermination de l'état d'excitation, correspondant à "voisé" ($Z_1$), "non voisé" ($Z_2$) ou "pause" ($Z_3$) dans la seconde étape d'extraction du système de reconnaissance, des paramètres sont obtenus dans la première étape d'extraction, à savoir un paramètre pour l'énergie de la bande vocale ($P_1$), un paramètre de phonation ($P_2$) et un paramètre pour le rapport énergétique spectral ($P_3$), caractérisé en ce que, pour commencer, un paramètre auxiliaire ($P_4$) pour une énergie relative est déterminé à partir du paramètre pour l'énergie de la bande vocale ($P_1$) et du paramètre de phonation ($P_2$), le paramètre auxiliaire ($P_4$) formant le rapport de l'énergie ($P_1$) du signal vocal actuel à une grandeur intermédiaire de l'énergie E, représentant elle-même une mesure de l'énergie du signal vocal dans des plages voisées, que les paramètres ($P_1$, $P_2$, $P_3$, $P_4$) sont ensuite combinés dans une unité fonctionnelle de combinaison, selon un schéma de combinaison préfixé, de manière que l'un des trois états d'excitation soit caractérisé par le paramètre d'état d'excitation concerné ($Z_1$, $Z_2$ ou $Z_3$), une transformation étant effectuée à cet effet, avant la combinaison, à l'aide d'éléments fonctionnels déterminés, de signaux d'entrée ($x_i$) en signaux de sortie ($y_i$) de ces éléments fonctionnels, les signaux d'entrée étant constitués par les paramètres ($P_1$, $P_2$, $P_3$, $P_4$) et les signaux de sortie étant les signaux à combiner, que, pour générer le paramètre auxiliaire ($P_4$), le paramètre de phonation ($P_2$) est d'abord comparé avec une constante ($C_1$) déterminée empiriquement, que, au cas où le paramètre de phonation ($P_2$) est plus grand que la constante ($P_1$), la grandeur intermédiaire de l'énergie (E) est multipliée par une autre constante ($C_2$), également déterminée empiriquement, en vue de l'obtention d'une nouvelle grandeur intermédiaire (E), que le paramètre pour l'énergie ($P_1$) est comparé avec la nouvelle grandeur intermédiaire (E), que, pour le cas où le paramètre pour l'énergie ($P_1$) est plus grand que la nouvelle grandeur intermédiaire (E), la grandeur intermédiaire (E) prend la valeur du paramètre pour l'énergie ($P_1$), que, pour le cas où le paramètre pour l'énergie ($P_1$) n'est pas plus grand que la nouvelle grandeur intermédiaire (E), cette nouvelle grandeur pour l'énergie est maintenue, que, pour le cas où le paramètre de phonation ($P_2$) n'est pas plus grand que la constante ($C_1$), la grandeur intermédiaire originale (E) pour l'énergie reste inchangée et que la valeur pour le paramètre auxiliaire ($P_4$) est fixée comme la différence entre la valeur intermédiaire (E) en vigueur pour l'énergie et le paramètre pour l'énergie ($P_1$).

2. Procédé selon la revendication 1, caractérisé en ce que les éléments fonctionnels sont réalisés par le logiciel dans un processeur, de préférence dans un microprocesseur.

3. Procédé selon la revendication 1, caractérisé en ce que les éléments fonctionnels sont réalisés par un montage matériel.

4. Procédé selon la revendication 1, caractérisé en ce que, dans le but d'une coordination univoque d'un signal vocal à l'état concerné, on choisit chaque fois l'état pour lequel a été déterminée la valeur de signal la plus haute.

0 138 071

## FIG 1

SPRACH-SIGNAL → [EXTRAKTION DER SIGNAL-PARAMETER] → P1, P2, P3 → [EXTRAKTION DES ANREGUNGS-ZUSTANDES] → Z1, Z2, Z3

## FIG 2

P1    P2

P2 ≥ C1 ? — N

J

E ← C2·E

P1 > E ? — N

J

E ← P1

P4 ← E−P1

P4

# FIG 3

$$y = \max(x_1, x_2 \dots, x_n)$$
$$x_i$$
$$i = 1, \dots, n$$

3.1    3.2    3.3    3.4

$$y = 1 - x_1 - \dots - x_n$$
$$y = 1 - x_1 - \dots - x$$

$$y = x_1 \cdot x_2$$

3.5    3.6

# FIG 4